# EUROPÄISCHE PATENTSCHRIFT

(11) **EP 2 608 982 B1**
(45) Veröffentlichungstag und Bekanntmachung des Hinweises auf die Patenterteilung: **04.06.2014**
(21) Anmeldenummer: 11749161.3
(22) Anmeldetag: 23.08.2011
(51) Int. Cl.: B60N 2/015, B60N 2/07, B60N 2/08

(54) **LÄNGSVERSTELLVORRICHTUNG FÜR EINEN FAHRZEUGSITZ MIT TRENNBARER OBER- UND UNTERSCHIENE**
LONGITUDINAL ADJUSTING DEVICE FOR A VEHICLE SEAT, COMPRISING A SEPARABLE UPPER AND LOWER RAIL
DISPOSITIF DE RÉGLAGE LONGITUDINAL D'UN SIÈGE DE VÉHICULE COMPORTANT UN RAIL INFÉRIEUR ET UN RAIL SUPÉRIEUR SÉPARABLES

(30) Priorität: 21.12.2010 DE 102010063615; 23.08.2010 DE 102010035157
(43) Veröffentlichungstag der Anmeldung: 03.07.2013
(73) Patentinhaber: Johnson Controls GmbH, 51399 Burscheid (DE)
(72) Erfinder: ECKENROTH, Dirk, 51469 Bergisch Gladbach (DE); RÖBKES, Holger, 42651 Solingen (DE)
(74) Vertreter: Finger, Catrin
(86) Internationale Anmeldenummer: PCT/EP2011/064490
(87) Internationale Veröffentlichungsnummer: WO 2012/025539

(56) Entgegenhaltungen:
- EP-A1- 0 922 606
- EP-A1- 1 176 047
- DE-A1-102009 001 318
- DE-U1- 20 019 891
- FR-A1- 2 864 481

## Beschreibung

Die Erfindung betrifft eine Längsverstellvorrichtung für einen Fahrzeugsitz mit trennbarer Ober- und Unterschiene gemäß dem Oberbegriff des Anspruchs 1 (s. zum Beispiel die DE 200 19 891 U1)*.*

Stand der Technik sind herkömmliche Längsverstellvorrichtungen für Fahrzeugsitze, welche eine Unter- und Oberschiene umfassen. Die Oberschiene ist in der Unterschiene angeordnet oder greift in diese ein, wobei die Oberschiene korrespondierend zur Unterschiene ausgeformt ist. Es ist nicht vorgesehen, dass die Oberschiene von der Unterschiene getrennt werden kann.

Trennbare Längsverstellvorrichtungen sind beispielsweise aus der am 24.02.2011 offengelegten DE 10 2009 038 126 A1, der am 14.04.2011 offengelegten DE 10 2009 048 498 A1 oder aus der EP 0 922 606 A1 bekannt.

Verschiebbare und entnehmbare oder verschiebbare und kippbare Fahrzeugsitze weisen im Stand der Technik eine Schieneneinheit aus Unter- und Oberschiene und eine separate Trennvorrichtung auf. Diese Trennvorrichtung bildet eine von der Schieneneinheit separierte Trennstelle zwischen Schieneneinheit und Fahrzeugsitz.

Weiterhin beschreibt die o.g. DE 200 19 891 U1 eine Vorrichtung zum zeitweiligen Verbinden eines bewegbaren Fahrzeugsitzes mit einer eine hinterschnittene Längsnut aufweisenden Halteschiene, in deren Kopfwand in Abständen zueinander Bohrungen eingebracht sind, deren Durchmesser größer ist als der Abstand der die hinterschnittenen Bereiche der Längsnut übergreifenden Formrippen voneinander ist. Von einem Stabelement der Vorrichtung ragen in Abstand zueinander wenigstens zwei in die Längsnut einsetzbare Verbindungselemente ab, die jeweils mit einem Kragorgan versehen sind, das in den hinterschnittenen Bereich der Halteschiene einschiebbar ausgebildet ist. In ein Hohlprofil der Vorrichtung sind in Abstand zueinander zwei den freien Profilquerschnitt ausfüllende Lagerblöcke als Halteorgane für das an der Profilaußenseite angeordnete Kragorgan eingebracht, wobei zwischen den Lagerblöcken das Hohlprofil von einem quer zur Profillängsachse bewegbaren sowie in eine Bohrung der Halteschiene einsetzbar gestalteten Bolzen durchsetzt ist.

Die FR 2 864 481 A1 beschreibt eine Anordnung für die Montage einer Unterbaugruppe eines Sitzes auf einem horizontalen Fußboden einer Fahrgastzelle eines Kraftfahrzeugs, welches ein Paar parallele Längsgleitschienen umfasst. Jede Gleitschiene weist im Querschnitt eine vertikale Querebene mit einem nach oben offenen C-Profilauf, welches einen Saum aufweist, dessen freier Endrand sich außerhalb des Profils erstreckt. Die Unterbaugruppe weist einen in den Längsgleitschienen angeordneten Sockel auf, welcher mit mindestens einem Verriegelungsorgan der Unterbaugruppe in einer bestimmten Längsposition und mit Walzen versehen ist. Die Walzen sind zu einer Verlagerung der Unterbaugruppe durch Rollen in Bezug zum Fußboden der Fahrgastzelle vorgesehen.

Aufgabe der vorliegenden Erfindung ist es, eine gegenüber dem Stand der Technik verbesserte und insbesondere flexibler nutzbare und leichtere Längsverstellvorrichtung für einen Fahrzeugsitz mit trennbarer Ober- und Unterschiene anzugeben.

Hinsichtlich der Längsverstellvorrichtung wird die Aufgabe durch die im Anspruch 1 angegebenen Merkmale gelöst.

Vorteilhafte Weiterbildungen der Erfindung sind Gegenstand der Unteransprüche.

Bei der Längsverstellvorrichtung für einen Fahrzeugsitz, welche eine Unterschiene und Oberschiene umfasst, wobei die Oberschiene längsverschiebbar in der Unterschiene angeordnet ist, steht die Oberschiene mit der Unterschiene in Eingriff, wobei an einer Oberkante der Unterschiene ein Halte- und Führungselement ausgebildet, angeformt oder angeordnet ist, welches die Oberschiene in Betriebsposition an der Unterschiene hält. Erfindungsgemäß sind in der Oberschiene zumindest zwei Verriegelungselemente angeordnet und/oder integriert, nach deren Entriegelung die Oberschiene und ein daran befestigter Fahrzeugsitz in einer vorgegebenen Position von der Unterschiene trennbar sind. Somit ist ein Fahrzeugsitz auf einfache Weise aus dem Fahrzeug entnehmbar. Die Unterschiene umfasst dabei zumindest das Schienenprofil und zwei seitlich davon angeordnete Flanschbereiche, wobei die Flanschbereiche Durchgangslöcher im Seitenabschnitt des Schienenprofils abdecken und somit eine Verletzungsgefahr für die Fahrzeuginsassen minimieren.

Im Vergleich zum Stand der Technik ist eine separate Trennvorrichtung zwischen Schieneneinheit und Fahrzeugsitz vermieden, welche teurer und schwerer ist sowie mehr Bauraum benötigt.

Besonders vorteilhafterweise wird bei der Erfindung ein einfaches und kostengünstiges Design für die Unterschiene ermöglicht. Dadurch kann eine Längsverstellvorrichtung mit besonders großem Verstellweg direkt an oder in eine Fahrzeugkarosserie integriert werden.

Vorteilhafterweise sind zwischen Oberschiene und Unterschiene wirkende Haltekräfte in horizontaler Längsrichtung und in vertikaler Richtung mittels einer durch die Verriegelungselemente gebildeten formschlüssigen Verbindung übertragbar.

Besonders vorteilhafterweise sind zwischen Oberschiene und Unterschiene wirkende Haltekräfte in vertikaler Richtung mittels einer durch das oberseitig zumindest auf die Verriegelungselemente einwirkende Halte- und Führungselement gebildeten formschlüssigen Verbindung übertragbar.

In einer vorteilhaften Ausführungsform ist in der Unterschiene eine Mehrzahl von Aussparungen angeordnet, so dass die Oberschiene in zumindest einer von den Aussparungen vorgegebenen Position von der Unterschiene trennbar ist.

Zweckmäßigerweise sind im Seitenabschnitt des Schienenprofils der Unterschiene eine Mehrzahl von Durchgangslöchern ausgebildet, welche in Längsrichtung der Unterschiene nebeneinander angeordnet und eine besonders fein abgestufte Arretierung der Oberschiene in Bezug auf die Unterschiene ermöglichen.

In einer weiteren vorteilhaften Ausführungsform ist ein in der Unterschiene angeordneter unterer Bereich der Oberschiene korrespondierend zu einem aufnehmenden Schienenprofil in der Unterschiene ausgeformt. Dadurch ist eine spielminimierte oder spielfreie Bewegung der Oberschiene relativ zur Unterschiene ermöglicht.

Zweckmäßigerweise ist in einem vorderen Endbereich und in einem hinteren Endbereich der Oberschiene jeweils ein Verriegelungselement angeordnet.

In einer weiteren vorteilhaften Ausführungsform ist an einer Oberkante der Unterschiene ein Halte- und Führungselement ausgebildet, angeformt oder angeordnet, welches die Oberschiene in Betriebsposition an der Unterschiene hält.

In jedem Halte- und Führungselement sind bevorzugt zwei Aussparungen in einem Abstand zueinander angeordnet, welcher mit einem Abstand der Verriegelungselemente in der Oberschiene korrespondiert. Somit ist mittels der Aussparungen die Position vorgegeben, in welcher die Oberschiene von der Unterschiene abgehoben werden kann.

Im Verriegelungselement ist besonders bevorzugt ein Verriegelungsbolzen quer zur Ausrichtung von Unterschiene und Oberschiene verschiebbar angeordnet, wobei ein Querschnitt des Verriegelungsbolzens korrespondierend zu den Durchgangslöchern, welche in den Seitenabschnitten des Schienenprofils angeordnet sind, ausgeformt ist. Dadurch können Unterschiene und Oberschiene relativ zueinander arretiert werden, so dass eine Bewegung zwischen Unterschiene und Oberschiene verhindert ist.

An der Oberschiene sind bevorzugt zumindest zwei Rollenelemente derart drehbar angeordnet oder integriert, dass sie die Oberschiene unterseitig zumindest abschnittsweise überragen, so dass die Rollenelemente in Betriebsposition der Oberschiene im Schienenprofil der Unterschiene abrollen. Dadurch ist eine besonders reibungsminimierte und kraftreduzierte Bewegung der Oberschiene relativ zur Unterschiene ermöglicht.

In einer alternativen Ausführungsform ist in der Oberschiene zumindest eine weitere Verriegelungseinheit angeordnet, welche in verriegelter Position unter eine Oberkante des Schienenprofils greift und ein Abheben der Oberschiene von der Unterschiene verhindert und in entriegelter Position ein Abheben der Oberschiene von der Unterschiene ermöglicht. Somit ist die Oberschiene in jeder Position von der Unterschiene trennbar.

Die beiden Halte- und Führungselemente sind bevorzugt aufeinander zuweisend ausgerichtet und überragen den Seitenabschnitt des Schienenprofils der Unterschiene. Somit sind die Verriegelungselemente in Betriebsposition der Oberschiene von den Halte- und Führungselementen formschlüssig gehalten und die Oberschiene ist gegen ein vertikales Abheben von der Unterschiene gesichert.

Besonders bevorzugter Weise ist der Flanschbereich an seiner Oberkante abgekantet und bildet derart das oder die Halte- und Führungselemente aus. Dadurch ist eine besonders einfache und effiziente Herstellung der Unterschiene ermöglicht, welche bevorzugter Weise aus zwei miteinander verbundenen Blechprägeteilen besteht.

Anhand der beigefügten schematischen Figuren wird die Erfindung näher erläutert.

Dabei zeigen:
- Figur 1: schematisch eine perspektivische Ansicht einer Schieneneinheit,
- Figur 2: schematisch eine perspektivische Ansicht einer Oberschiene,
- Figur 3: schematisch eine perspektivische Ansicht einer Unterschiene,
- Figur 4: schematisch eine Schnittdarstellung eines Verriegelungselementes in Betriebsposition und
- Figur 5: schematisch eine Schnittdarstellung eines Verriegelungselementes in Entnahmeposition.

Einander entsprechende Teile sind in allen Figuren mit den gleichen Bezugszeichen versehen.

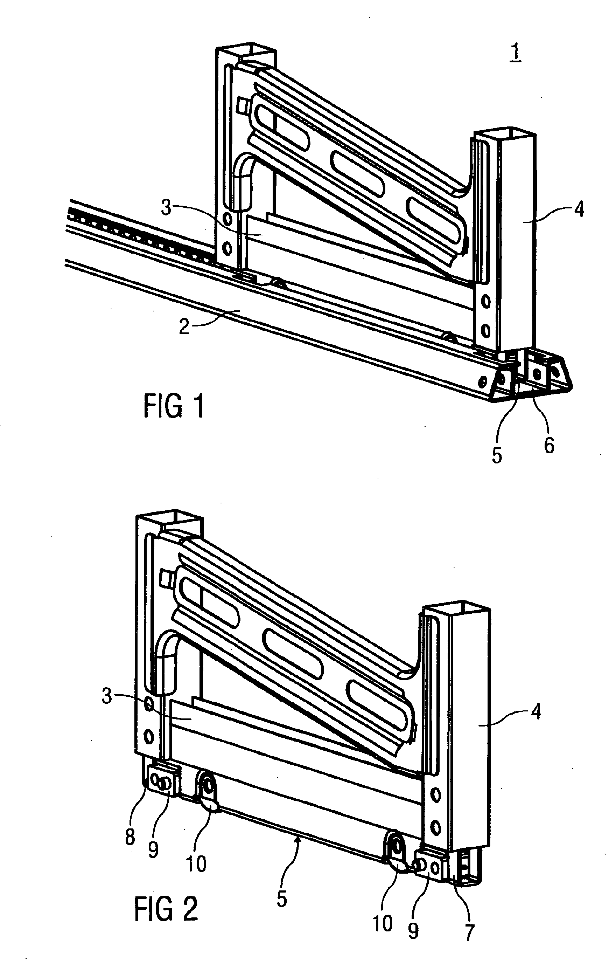

In Figur 1 ist schematisch eine perspektivische Ansicht einer Schieneneinheit 1 dargestellt. Eine solche Schieneneinheit 1 umfasst eine Unterschiene 2 und eine Oberschiene 3.

Die Unterschiene 2 ist in herkömmlicher und nicht dargestellter Weise an einem Fahrzeugboden eines Fahrzeugs befestigt und vorzugsweise in Längsrichtung des Fahrzeugs ausgerichtet.

An der Oberschiene 3 ist ein herkömmlicher Fahrzeugsitz angeordnet, von welchem ein Rahmenelement 4 dargestellt ist. Durch eine Längsverschiebung der Oberschiene 3 relativ zur Unterschiene 2 ist somit der Fahrzeugsitz im Fahrzeug verschiebbar.

In der in Figur 1 dargestellten Betriebsposition der Schieneneinheit 1 ist die Oberschiene 3 längsverschiebbar zumindest bereichsweise in der Unterschiene 2 angeordnet.

Ein in der Unterschiene 2 angeordneter unterer Bereich 5 der Oberschiene 3 ist korrespondierend zu dem aufnehmenden Schienenprofil 6 in der Unterschiene 2 ausgeformt.

In Figur 2 ist schematisch eine perspektivische Ansicht der Oberschiene 3 mit daran angeordnetem Rahmenelement 4 dargestellt.

In einem vorderen Endbereich 7 und in einem hinteren Endbereich 8 der Oberschiene 3 ist jeweils ein Verriegelungselement 9 angeordnet.

Die Verriegelungselemente 9 sind im unteren Bereich 5 der Oberschiene 3 angeordnet und in Betriebsposition der Schieneneinheit 1 im Schienenprofil 6 der Unterschiene 2 innenliegend angeordnet.

Zwischen den Verriegelungselementen 9 sind im unteren Bereich 5 der Oberschiene 3 zumindest zwei herkömmliche Rollenelemente 10 drehbar angeordnet. Diese Rollenelemente 10 rollen im Schienenprofil 6 der Unterschiene 2 und ermöglichen dadurch eine reibungsminimierte und kraftreduzierte Bewegung der Oberschiene 3 relativ zur Unterschiene 2.

In einer alternativen, nicht dargestellten Ausführungsform sind an Stelle der Rollenelemente 10 herkömmliche Gleitelemente, beispielsweise aus einem reibungsreduzierten Kunststoff, anordenbar

In einer weiteren alternativen, nicht dargestellten Ausführungsform können die Rollenelemente 10 auf einem Flanschbereich 11 der Unterschiene 2 rollen.

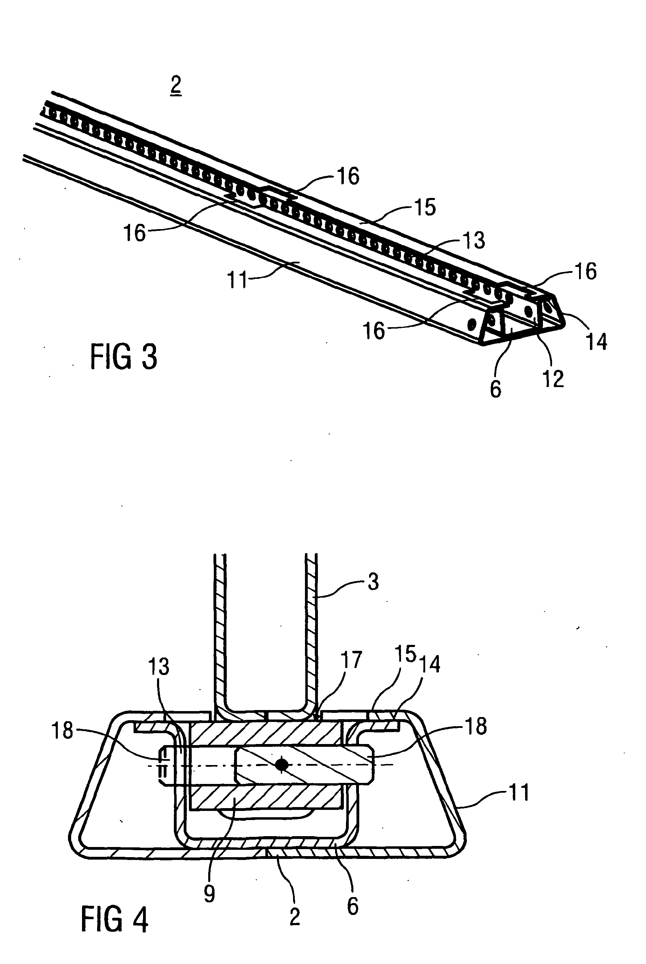

In Figur 3 ist schematisch eine perspektivische Ansicht der Unterschiene 2 dargestellt.

Die Unterschiene 2 umfasst zumindest das Schienenprofil 6 und zwei seitlich davon angeordnete Flanschbereiche 11.

Das Schienenprofil 6 ist im Wesentlichen u-förmig ausgebildet und weist in seinen Seitenabschnitten 12 eine Vielzahl von in Längsrichtung des Schienenprofils 6 nebeneinander angeordneten Durchgangslöchern 13 auf.

An einer Oberkante 14 jedes Seitenabschnitts 12 des Schienenprofils 6 ist ein Halte- und Führungselement 15 angeordnet.

Die beiden Halte- und Führungselemente 15 sind aufeinander zuweisend ausgerichtet und überragen den Seitenabschnitt 12.

Insbesondere kann ein Flanschbereich 11 an der Oberkante 14 abgekantet sein und das Halte- und Führungselement 15 ausbilden.

In einer nicht dargestellten Ausführungsvariante kann das Halte- und Führungselement 15 als separates Bauteil ausgebildet und an der Oberkante 14 angeordnet sein.

In jedem Halte- und Führungselement 15 sind zwei Aussparungen 16 in einem Abstand zueinander angeordnet, welcher mit einem Abstand der Verriegelungselemente 9 in der Oberschiene 3 korrespondiert.

Die Aussparungen 16 der beiden benachbarten Halte- und Führungselemente 15 sind einander gegenüberliegend angeordnet.

Die Aussparungen 16 sind derart ausgeformt, dass sie den Seitenabschnitt 12 nicht überragen. Beispielsweise schließen Seitenabschnitt 12 und Aussparungen 16 bündig miteinander ab.

In Figur 4 ist schematisch eine Schnittdarstellung des Verriegelungselements 9 in Betriebsposition dargestellt.

Als Betriebsposition wird eine Position bezeichnet, in welcher die Oberschiene 3 verschiebbar in der Unterschiene 2 angeordnet ist, wobei sich die Verriegelungselemente 9 nicht im Bereich der Aussparungen 16 befinden.

Dadurch sind die Verriegelungselemente 9 an ihrer Oberseite 17 vom Halte- und Führungselement 15 gehalten und die Oberschiene 3 ist formschlüssig gegen ein Trennen von der Unterschiene gesichert. Dabei sind mittels dieser formschlüssigen Verbindung zwischen Oberschiene 3 und Unterschiene 2 wirkende Haltekräfte in vertikaler Richtung übertragbar.

Eine Breite des Verriegelungselements 9 ist korrespondierend zu einer Innenbreite des Schienenprofils 6 ausgeformt.

Im Verriegelungselement 9 ist ein Verriegelungsbolzen 18 in Fahrzeugquerrichtung, mithin quer zur Ausrichtung der Schieneneinheit 1, verschiebbar angeordnet.

Ein Querschnitt des Verriegelungsbolzens 18 ist korrespondierend zu den Durchgangslöchern 13 in den Seitenabschnitten 12 des Schienenprofils 6 ausgeformt.

Im Betrieb des Verriegelungselements 9 ist der Verriegelungsbolzen 18 in einer ersten Position vollständig im Verriegelungselement 9 angeordnet. In dieser Position ist die Oberschiene 3 in der Unterschiene 2 verschiebbar.

In einer zweiten Position wird der Verriegelungsbolzen 18 derart in Fahrzeugquerrichtung verschoben, dass er aus dem Verriegelungselement 9 herausragt und in einem der Durchgangslöcher 13 im Seitenabschnitt 12 des Schienenprofils 6 angeordnet ist. In dieser Position ist die Oberschiene 3 in der Unterschiene 2 arretiert, so dass jegliche Relativbewegung zwischen Oberschiene 3 und Unterschiene 2 vermieden ist. Daraus resultierend ist der an der Oberschiene 3 angeordnete Fahrzeugsitz nicht verschiebbar und seine Position ist gegen eine Veränderung gesichert.

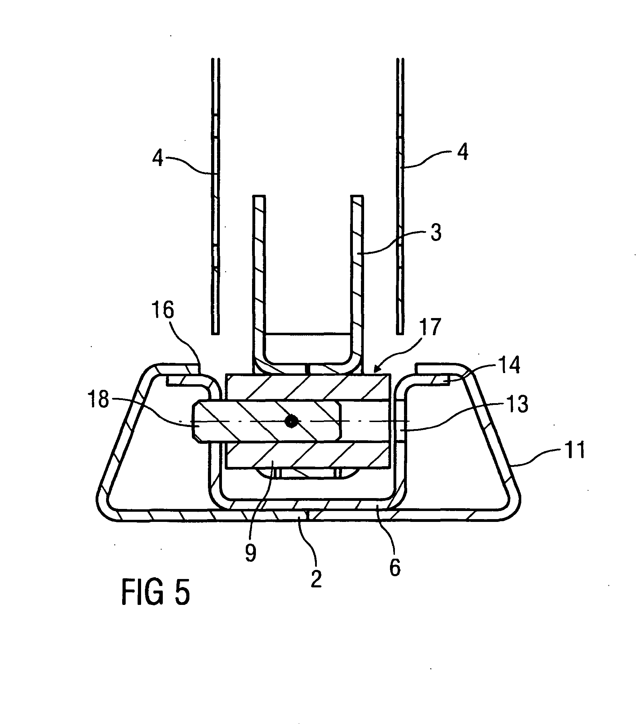

In Figur 5 ist schematisch eine Schnittdarstellung des Verriegelungselements 9 in Entnahmeposition dargestellt.

Als Entnahmeposition wird die Position bezeichnet, in welcher sich die Verriegelungselemente 9 im Bereich der Aussparungen 16 befinden.

In dieser Position sind die Verriegelungselemente 9 an ihrer Oberseite 17 nicht vom Halte- und Führungselement 15 gehalten. Dadurch ist die Oberschiene 3 mit dem daran angeordneten Fahrzeugsitz nach Lösen des Verriegelungsbolzens 18 nach oben aus der Unterschiene 2 und somit aus dem Fahrzeug entnehmbar.

In einer alternativen, nicht dargestellten und nicht erfindungsgemäßen Ausführungsform entfällt das Halte- und Führungselement 15 auf der Oberkante 14 des Schienenprofils 6. In der Oberschiene 3 ist zumindest eine weitere Verriegelungseinheit angeordnet, welche in verriegelter Position unter die Oberkante 14 des Schienenprofils 6 greift und somit ein Abheben der Oberschiene 3 von der Unterschiene 2 verhindert. In entriegelter Position der weiteren Verriegelungseinheit ist das Abheben der Oberschiene 3 von der Unterschiene 2 ermöglicht. Durch die weitere Verriegelungseinheit in der Oberschiene 3 ist eine Trennung von Oberschiene 3 und Unterschiene 2 an jeder Stelle im Verfahrbereich der Schieneneinheit 1 ermöglicht.

### Bezugszeichenliste

- 1: Schieneneinheit
- 2: Unterschiene
- 3: Oberschiene
- 4: Rahmenelement
- 5: unterer Bereich
- 6: Schienenprofil
- 7: vorderer Endbereich
- 8: hinterer Endbereich
- 9: Verriegelungselement
- 10: Rollenelemente
- 11: Flanschbereich
- 12: Seitenabschnitt
- 13: Durchgangsloch
- 14: Oberkante
- 15: Halte- und Führungselement
- 16: Aussparung
- 17: Oberseite
- 18: Verriegelungsbolzen

## Patentansprüche

1. Längsverstellvorrichtung für einen Fahrzeugsitz, welche eine Unterschiene (2) und Oberschiene (3) umfasst, wobei die Oberschiene (3) längsverschiebbar in der Unterschiene (2) angeordnet ist, wobei die Oberschiene (3) mit der Unterschiene (2) in Eingriff steht, wobei an einer Oberkante (14) der Unterschiene (2) ein Halte- und Führungselement (15) ausgebildet, angeformt oder angeordnet ist, welches die Oberschiene (3) in Betriebsposition an der Unterschiene (2) hält,
**dadurch gekennzeichnet, dass** in der Oberschiene (3) zumindest zwei Verriegelungselemente (9) angeordnet und/oder integriert sind, nach deren Entriegelung die Oberschiene (3) und ein daran befestigter Fahrzeugsitz in einer vorgegebenen Position von der Unterschiene (2) trennbar sind, wobei die Unterschiene (2) zumindest ein Schienenprofil (6) und zwei seitlich davon angeordnete Flanschbereiche (11) umfasst, die in Seitenabschnitten (12) des Schienenprofils (6) angeordnete Durchgangslöcher (13) abdecken.

2. Längsverstellvorrichtung nach Anspruch 1,
**dadurch gekennzeichnet, dass** zwischen Oberschiene (3) und Unterschiene (2) wirkende Haltekräfte in horizontaler Längsrichtung und in vertikaler Richtung mittels einer durch die Verriegelungselemente (9) gebildeten formschlüssigen Verbindung übertragbar sind.

3. Längsverstellvorrichtung nach Anspruch 1 oder 2,
**dadurch gekennzeichnet, dass** zwischen Oberschiene (3) und Unterschiene (2) wirkende Haltekräfte in vertikaler Richtung mittels einer durch das oberseitig zumindest auf die Verriegelungselemente (9) einwirkende Halte- und Führungselement (15) gebildeten formschlüssigen Verbindung übertragbar sind.

4. Längsverstellvorrichtung nach einem der vorherigen Ansprüche,
**dadurch gekennzeichnet, dass** in der Unterschiene (2) eine Mehrzahl von Aussparungen (16) angeordnet ist, so dass die Oberschiene (3) in zumindest einer von den Aussparungen (16) vorgegebenen Position von der Unterschiene (2) trennbar ist.

5. Längsverstellvorrichtung nach einem der vorherigen Ansprüche,
**dadurch gekennzeichnet, dass** im Seitenabschnitt (12) des Schienenprofils (6) der Unterschiene (2) eine Mehrzahl von Durchgangslöchern (13) ausgebildet ist, welche in Längsrichtung der Unterschiene (2) nebeneinander angeordnet sind.

6. Längsverstellvorrichtung nach einem der vorherigen Ansprüche,
**dadurch gekennzeichnet, dass** ein in der Unterschiene (2) angeordneter unterer Bereich (5) der Oberschiene (3) korrespondierend zu einem aufnehmenden Schienenprofil (6) in der Unterschiene (2) ausgeformt ist.

7. Längsverstellvorrichtung nach einem der vorherigen Ansprüche,
**dadurch gekennzeichnet, dass** in einem vorderen Endbereich (7) und in einem hinteren Endbereich (8) der Oberschiene (3) jeweils ein Verriegelungselement (9) angeordnet ist.

8. Längsverstellvorrichtung nach Anspruch 7,
**dadurch gekennzeichnet, dass** in jedem Halte- und Führungselement (15) zwei Aussparungen (16) in einem Abstand zueinander angeordnet sind, welcher mit einem Abstand der Verriegelungselemente (9) in der Oberschiene (3) korrespondiert.

9. Längsverstellvorrichtung nach einem der Ansprüche 4 bis 8,
**dadurch gekennzeichnet, dass** in dem jeweiligen Verriegelungselement (9) ein Verriegelungsbolzen (18) quer zur Ausrichtung von Unterschiene (2) und Oberschiene (3) verschiebbar angeordnet ist, wobei ein Querschnitt des Verriegelungsbolzens (18) korrespondierend zu den Durchgangslöchern (13) ausgeformt ist.

10. Längsverstellvorrichtung nach einem der vorherigen Ansprüche,
**dadurch gekennzeichnet, dass** an der Oberschiene (3) zumindest zwei Rollenelemente (10) derart drehbar angeordnet oder integriert sind, dass sie die Oberschiene (3) unterseitig zumindest abschnittsweise überragen.

11. Längsverstellvorrichtung nach Anspruch 10,
**dadurch gekennzeichnet, dass** die Rollenelemente (10) in Betriebsposition der Oberschiene (3) im Schienenprofil (6) der Unterschiene (2) abrollen.

12. Längsverstellvorrichtung nach einem der vorherigen Ansprüche,
**dadurch gekennzeichnet, dass** in der Oberschiene (3) zumindest eine weitere Verriegelungseinheit angeordnet ist, welche in verriegelter Position unter die Oberkante (14) des Schienenprofils (6) greift und ein Abheben der Oberschiene (3) von der Unterschiene (2) verhindert und in entriegelter Position ein Abheben der Oberschiene (3) von der Unterschiene (2) ermöglicht.

13. Längsverstellvorrichtung nach einem der vorherigen Ansprüche,
**dadurch gekennzeichnet, dass** die beiden Halte- und Führungselemente (15) aufeinander zuweisend ausgerichtet sind und den Seitenabschnitt (12) des Schienenprofils (6) der Unterschiene (2) überragen.

14. Längsverstellvorrichtung nach einem der vorherigen Ansprüche,
**dadurch gekennzeichnet, dass** der Flanschbereich (11) an der Oberkante (14) abgekantet ist und derart das Halte- und Führungselement (15) ausbildet.

## Claims

1. A longitudinal adjusting device for a vehicle seat, said longitudinal adjusting device comprising a lower rail (2) and an upper rail (3), wherein the upper rail (3) is longitudinally displaceably arranged in the lower rail (2),
whereby the upper rail (3) is in engagement with the lower rail (2), wherein a retaining and guiding element (15) is configured, integrally formed or arranged on an upper edge (14) of the lower rail (2), said retaining and guiding element retaining the upper rail (3) in the operating position on the lower rail (2) and **characterized in that** at least two locking elements (9) are arranged and/or integrated in the upper rail (3), and after the unlocking thereof the upper rail (3) and a vehicle seat fastened thereto in a predetermined position are able to be separated from the lower rail (2) whereby the lower rail (2) comprises at least the rail profile (6) and two flange regions (11) arranged laterally therefrom, said flange regions (11) covering through-holes (13) which are arranged in side portions (12) of the rail profile (6).

2. The longitudinal adjusting device as claimed in claim 1,
**characterized in that** retaining forces acting between the upper rail (3) and the lower rail (2) may be transmitted in the horizontal longitudinal direction and in the vertical direction by means of a positive connection formed by the locking elements (9).

3. The longitudinal adjusting device as claimed in claim 1 or 2,
**characterized in that** retaining forces acting between the upper rail (3) and the lower rail (2) may be transmitted in the vertical direction by means of a positive connection formed by the retaining and guiding element (15) acting on the upper face at least on the locking elements (9).

4. The longitudinal adjusting device as claimed in one of the preceding claims,
**characterized in that** a plurality of recesses (16) is arranged in the lower rail (2) so that the upper rail (3) is able to be separated from the lower rail (2) in at least one position predetermined by the recesses (16).

5. The longitudinal adjusting device as claimed in one of the preceding claims,
**characterized in that** a plurality of through-holes (13) is formed in the side portion (12) of the rail profile (6) of the lower rail (2), said through-holes being arranged adjacent to one another in the longitudinal direction of the lower rail (2).

6. The longitudinal adjusting device as claimed in one of the preceding claims, **characterized in that** a lower region (5) of the upper rail (3) arranged in the lower rail (2) is shaped so as to correspond to a receiving rail profile (6) in the lower rail (2).

7. The longitudinal adjusting device as claimed in one of the preceding claims, **characterized in that** in each case a locking element (9) is arranged in a front end region (7) and in a rear end region (8) of the upper rail (3).

8. The longitudinal adjusting device as claimed in claim 7,
**characterized in that** in each retaining and guiding element (15) two recesses (16) are arranged at a distance from one another which corresponds to a distance between the locking elements (9) in the upper rail (3).

9. The longitudinal adjusting device as claimed in one of claims 4 to 8,
**characterized in that** a locking pin (18) is displaceably arranged in the respective locking element (9), transversely to the alignment of the lower rail (2) and the upper rail (3), wherein a cross section of the locking pin (18) is formed so as to correspond to the through-holes (13).

10. The longitudinal adjusting device as claimed in one of the preceding claims,
**characterized in that** at least two roller elements (10) are rotatably arranged or integrated on the upper rail (3), such that said roller elements protrude at least partially on the lower face of the upper rail (3).

11. The longitudinal adjusting device as claimed in claim 10,
**characterized in that** in the operating position of the upper rail (3) the roller elements (10) roll in the rail profile (6) of the lower rail (2).

12. The longitudinal adjusting device as claimed in one of the preceding claims,
**characterized in that** at least one further locking unit is arranged in the upper rail (3), said locking unit engaging below the upper edge (14) of the rail profile (6) in the locked position and preventing the upper rail (3) from lifting away from the lower rail (2), and in the unlocked position enabling the upper rail (3) to lift away from the lower rail (2).

13. The longitudinal adjusting device as claimed in one of the preceding claims,
**characterized in that** the two retaining and guiding elements (15) are aligned so as to face one another and protrude over the side portion (12) of the rail profile (6) of the lower rail (2).

14. The longitudinal adjusting device as claimed in one of the preceding claims,
**characterized in that** the flange region (11) is chamfered on the upper edge (14) and in this manner forms the retaining and guiding element (15).

## Revendications

1. Dispositif de réglage longitudinal pour un siège de véhicule, qui comprend un rail inférieur (2) et un rail supérieur (3), le rail supérieur (3) étant disposé de manière déplaçable longitudinalement dans le rail inférieur (2), le rail supérieur (3) étant en prise avec le rail inférieur (2), un élément de retenue et de guidage (15) étant réalisé, façonné ou disposé au niveau d'un bord supérieur (14) du rail inférieur (2), lequel retient le rail supérieur (3) en position de fonctionnement sur le rail inférieur (2),
**caractérisé en ce que** dans le rail supérieur (3) sont disposés et/ou intégrés au moins deux éléments de verrouillage (9) qui, lorsqu'ils sont déverrouillés, permettent de séparer le rail supérieur (3) et un siège de véhicule fixé sur celui-ci du rail inférieur (2) dans une position prédéterminée, le rail inférieur (2) comprenant au moins un profilé de rail (6) et deux régions de bride (11) disposées latéralement par rapport à celui-ci, lesquelles recouvrent des trous de passage (13) disposés dans des portions latérales (12) du profilé de rail (6).

2. Dispositif de réglage longitudinal selon la revendication 1,
**caractérisé en ce que** des forces agissant entre le rail supérieur (3) et le rail inférieur (2) dans la direction longitudinale horizontale et dans la direction verticale peuvent être transmises au moyen d'une connexion par engagement par correspondance de forme constituée par les éléments de verrouillage (9).

3. Dispositif de réglage longitudinal selon la revendication 1 ou 2,
**caractérisé en ce que** des forces de retenue agissant entre le rail supérieur (3) et le rail inférieur (2) dans la direction verticale peuvent être transmises au moyen d'une connexion par engagement par correspondance de forme formée par l'élément de retenue et de guidage (15) agissant du côté supérieur au moins sur les éléments de verrouillage (9).

4. Dispositif de réglage longitudinal selon l'une quelconque des revendications précédentes,
**caractérisé en ce qu'**une pluralité d'évidements (16) sont disposés dans le rail inférieur (2), de sorte que le rail supérieur (3) puisse être séparé du rail inférieur (2) dans au moins une position prédéfinie par les évidements (16).

5. Dispositif de réglage longitudinal selon l'une quelconque des revendications précédentes,
**caractérisé en ce qu'**une pluralité de trous de passage (13) sont réalisés dans la portion latérale (12) du profilé de rail (6) du rail inférieur (2), lesquels trous de passage sont disposés les uns à côté des autres dans la direction longitudinale du rail inférieur (2).

6. Dispositif de réglage longitudinal selon l'une quelconque des revendications précédentes,
**caractérisé en ce qu'**une région inférieure (5) du rail supérieur (3) disposée dans le rail inférieur (2) est formée de manière correspondant à un profilé de rail de réception (6) dans le rail inférieur (2).

7. Dispositif de réglage longitudinal selon l'une quelconque des revendications précédentes,
**caractérisé en ce que** dans une région d'extrémité avant (7) et dans une région d'extrémité arrière (8) du rail supérieur (3) est à chaque fois disposé un élément de verrouillage (9).

8. Dispositif de réglage longitudinal selon la revendication 7,
**caractérisé en ce que** dans chaque élément de retenue et de guidage (15) sont disposés deux évidements (16) à une distance l'un de l'autre qui correspond à une distance entre les éléments de verrouillage (9) dans le rail supérieur (3).

9. Dispositif de réglage longitudinal selon l'une quelconque des revendications 4 à 8,
**caractérisé en ce que** dans l'élément de verrouillage respectif (9) est disposé un boulon de verrouillage (18) déplaçable transversalement par rapport à l'orientation du rail inférieur (2) et du rail supérieur (3), une section transversale du boulon de verrouillage (18) étant formée de manière correspondant aux trous de passage (13).

10. Dispositif de réglage longitudinal selon l'une quelconque des revendications précédentes,
**caractérisé en ce qu'**au moins deux éléments de rouleaux (10) sont disposés et/ou intégrés de manière rotative sur le rail supérieur (3) de telle sorte qu'ils dépassent au moins en partie au-delà du rail supérieur (3) du côté inférieur.

11. Dispositif de réglage longitudinal selon la revendication 10,
**caractérisé en ce que** les éléments de rouleaux (10) roulent dans le profilé de rail (6) du rail inférieur (2) dans la position de fonctionnement du rail supérieur (3).

12. Dispositif de réglage longitudinal selon l'une quelconque des revendications précédentes,
**caractérisé en ce que** dans le rail supérieur (3) est disposée au moins une unité de verrouillage supplémentaire qui, dans la position verrouillée, s'engage sous le bord supérieur (14) du profilé de rail (6) et empêche un soulèvement du rail supérieur (3) depuis le rail inférieur (2) et, dans la position déverrouillée, permet un soulèvement du rail supérieur (3) depuis le rail inférieur (2).

13. Dispositif de réglage longitudinal selon l'une quelconque des revendications précédentes,
**caractérisé en ce que** les deux éléments de retenue et de guidage (15) sont orientés de manière à se faire face et dépassent au-delà de la portion latérale (12) du profilé de rail (6) du rail inférieur (2).

14. Dispositif de réglage longitudinal selon l'une quelconque des revendications précédentes,
**caractérisé en ce que** la région de bride (11) est repliée au niveau du bord supérieur (14) et constitue ainsi l'élément de retenue et de guidage (15).
